(19) Europäisches Patentamt / European Patent Office / Office européen des brevets

(11) **EP 4 768 223 A1**

(12) **EUROPEAN PATENT APPLICATION**

(43) Date of publication:
**01.07.2026 Bulletin 2026/27**

(21) Application number: **25222081.9**

(22) Date of filing: **10.12.2025**

(51) International Patent Classification (IPC):
**B29C 45/76** (2006.01)   **B29C 45/28** (2006.01)

(52) Cooperative Patent Classification (CPC):
**B29C 45/76;** B29C 45/2806; B29C 2945/7609;
B29C 2945/76163; B29C 2945/76277;
B29C 2945/76943

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **27.12.2024 IT 202400030081**

(71) Applicant: **Inglass S.p.A.**
**31020 San Polo di Piave (Treviso) (IT)**

(72) Inventors:
• **DANIEL, Roberto**
**31020 San Polo di Piave (TV) (IT)**
• **DE IESU, Stefano**
**31020 San Polo di Piave (TV) (IT)**

(74) Representative: **Citron, Massimiliano**
**Via Primo Maggio, 6**
**31020 San Fior (TV) (IT)**

(54) **MONITORING METHOD AND SYSTEM FOR AN INJECTION MOLDING SYSTEM**

(57)    A monitoring method is described for an injection molding system, with the steps of
1) closing an injection nozzle (20) by moving a valve pin (30) towards the injection nozzle (20), and through a sensor (60) acquiring data indicative of the actual position of the pin (30) when it has reached an end-of-travel position thereof towards the nozzle (20);

2) obtaining a comparison value from the acquired data and comparing the comparison value with a reference value, and
3) emitting a signal if the result of the comparison indicates that the actual position is further from the nozzle (20) than the reference value.

Fig. 1

**Description**

The invention relates to a system and method for monitoring the closing position of a valve pin adapted for regulating a flow of molten material through an injection nozzle into a mold cavity during an injection molding cycle.

It is well known to use a valve pin to regulate the flow of molten material exiting a gate nozzle into a mold cavity during injection molding (see, for example, EP23170955 A1). The injection molding of automotive headlights (taken here as an example) is particularly challenging and complex, where the injection point is placed on large, visible, and aesthetically important surfaces. Any residue or damage to either the injector or the mold components will result in unacceptable defects in the molded part.

The valve pin is movable along a stroke consisting of a first section, closest to the nozzle, and a second section, further from the nozzle, where the nozzle is fully open.

The valve pin is displaced in a controlled manner according to different logics in the two sections: it is regulated with a position control in the second section and with a control of applied force in the first section, so as to adapt the movement of the pin to the current (real-time) conditions of the injected material. The aim is to avoid movements with force applied to the pin that could damage one or more components of the hot runner or the mold (excess force could break the gate).

This type of control has the problem that the actual closed position of the pin can change over time, resulting in a burr forming on the molded part that forces it to be rejected. Before the quality department notices the defect, dozens of parts might be molded, resulting in significant material waste and wasted resources.

The main object of the invention is to overcome the above-mentioned problem, and more specifically to improve the monitoring of defective molded pieces and even more specifically to prevent or limit their appearance.

At least one object is achieved by what is set forth in the claims herein.

One aspect of the invention is a first monitoring method for an injection molding system comprising:

- a linearly movable valve pin to regulate a flow of molten material exiting a (gate) nozzle towards a mold cavity,
- an actuator to move the pin;
- a position sensor to detect the position of the pin;
- an electronic controller to drive the actuator,

with the steps of

1) during the nozzle closing step, acquiring via the sensor a data indicative of the actual position of the pin when it has reached its end-of-travel position towards the nozzle;
2) obtaining a comparison value from the acquired data and comparing the comparison value with a reference value, and
3) emitting a signal if the comparison result indicates that the actual position is further from the nozzle than the reference value.

Another aspect of the invention is a second monitoring method for an injection molding system, with the steps of

1) closing an injection nozzle by moving a valve pin toward the injection nozzle, and
via a sensor, acquiring data indicative of the actual position of the pin when it has reached its end-of-travel position towards the nozzle;
2) obtaining a comparison value from the acquired data and comparing the comparison value with a reference value, and
3) emitting a signal if the comparison result indicates that the actual position is further from the nozzle than the reference value.

Another aspect of the invention is an injection molding apparatus comprising :

- a mold cavity;
- an injection nozzle communicating with the cavity;
- a linearly movable valve pin to regulate a flow of molten material exiting the nozzle towards the mold cavity,
- an actuator to move the pin;
- a position sensor to detect the position of the pin;
- an electronic controller configured for

  • driving the actuator and move the pin towards the nozzle,

- during the nozzle closing step via the sensor acquiring data indicative of the actual position of the pin when it has reached its end-of-travel position towards the nozzle;
- obtaining a comparison value from the acquired data and comparing the comparison value with a reference value, and
- emitting a signal if the comparison result indicates that the actual position is further from the nozzle than the reference value.

For the above aspects, the following preferred embodiments apply, which can be implemented alone or in any combination.

In one embodiment, the controller is programmed to perform the main steps of at least one method and one or each of the preferred optional steps defined below.

In one embodiment, the nozzle has a stroke composed of a first section, closer to the nozzle, and a second section, further from the nozzle, and the pin is moved toward the nozzle with position control in the second section and with control of force applied to the pin in the first section.

For this purpose, the controller is preferably configured to drive the actuator and displace the pin toward the nozzle with position control in the second section and with control of the force applied to the pin in the first section.

In one embodiment, step 1) occurs only when the pin is traveling the first section and is moved via a control of force impressed on it.

In one embodiment, steps 1)÷3) occur only when the pin is traveling the first section and is moved by a control of force impressed on it.

Real-time control of the pin position may be achieved using different strategies.

In one embodiment, the comparison value is the pin position acquired by the sensor and the reference value is a reference position.

The first method then has the steps of

1) during the nozzle closing step, acquiring via the sensor a data indicative of the actual position of the pin when it has reached its end-of-travel position towards the nozzle;
2) comparing the data with a reference value, and
3) emitting a signal if the comparison result indicates that the actual position is further from the nozzle than the reference value.

The second method then has the steps of

2) comparing the data with a reference position, and
3) emitting a signal if the comparison result indicates that the actual position is further from the nozzle than the reference position.

The injection molding apparatus then comprises:

- a mold cavity;
- a nozzle communicating with the cavity;
- a valve pin movable linearly along a stroke to regulate a flow of molten material exiting the nozzle towards the mold cavity,

the stroke being composed of a first section, closer to the nozzle, and a second section further away from the nozzle;

- an actuator to move the pin;
- a position sensor to detect the position of the pin;
- a controller configured for

- driving the actuator and moving the pin towards the nozzle with a position control in the second section and a control of the force applied to the pin in the first section;
- during the nozzle closing step, via the sensor acquiring a data indicative of the actual position of the pin when it has reached its end-of-travel position towards the nozzle in the first section;
- comparing the data with a reference position; and
- emitting a signal if the comparison result indicates that the actual position is further from the nozzle than the reference position.

In one embodiment, the comparison value is calculated by processing one or more position values acquired by the sensor in the same injection cycle or in subsequent cycles, and the reference value is a numerical value that expresses a threshold position. For example, a positional monitoring of the pin may be implemented that operates with statistical criteria, e.g., with the methods:

- through the sensor, a plurality of N values, called $P_1, P_2 ... P_N$, of the actual position of the pin when it has reached its end-of-travel position, are acquired;
- the standard deviation $\sigma$ of the N values with respect to an average value Vm is calculated, and
- the warning signal is generated if the standard deviation $\sigma$ is greater than a threshold value.

For example, the average value Vm can be considered Pzero or it can be calculated ex novo as

$$Vm = \frac{1}{N} \sum_{i=1}^{N} P_i.$$

The value $\sigma$ can be calculated e.g. as

$$\sigma = \sqrt{\sum_{i=1}^{N} (P_i - Vm)^2}.$$

In one embodiment, the data acquired by the sensor refers to the tip of the valve pin, but not necessarily. Any other point on the pin can be used as long as the reference position is established accordingly.

In one embodiment, the signal is emitted after N times, N >= 2, that the comparison result indicates that the actual position is further from the nozzle than the reference position. A tolerance number N of cycles can thus be set, representing the number of molding cycles during which the valve pin is allowed to move too far from the nozzle without generating the signal. If the distance exceeds the reference position for more than N cycles, the signal is generated. This function allows, for example, preventive maintenance by notifying operators before a significant deviation occurs, but tolerates accidental and sporadic deviations.

In a more preferred embodiment, the signal is emitted after N consecutive times, N >= 2, that the comparison result indicates that the actual position is further from the nozzle than the actual position.

The signal of step 3) may be e.g.

an audible or visual warning signal, e.g. presented on a display, and/or
an SMS or email message, and/or
a signal with the function of stopping the operation of the molding system.

In one embodiment, the actuator is a motor, most preferably a rotary or linear electric motor.

Said sensor may generally be any type of sensor adapted for detecting a position. In one embodiment, the position sensor is a rotary encoder connected to a rotating output shaft of the motor, where the position of the shaft is calculated by detecting the angular position of the shaft detected by the encoder. In one embodiment, the position sensor is a linear encoder.

In one embodiment, said control of the force impressed on the pin is a control of the torque applied by the rotary electric motor on said shaft and detected there by the sensor.

In one embodiment, the actuator comprises an actuating member, e.g. an output shaft, connected via a kinematic chain to the valve pin to convert a, e.g. rotary, movement of the actuating member into a linear movement of the pin.

In one embodiment, the molding system comprises one or more nozzles with a related valve pin, and one or each of said methods envisages of receiving a selection from a user to establish on which nozzle to perform steps 1 ÷ 3 and related variants.

In one embodiment, one or each method comprises the steps of

- defining a zero position that represents a closing target position for the valve pin, e.g. for the tip of the valve pin;
- defining for the valve pin, e.g. for the tip of the valve pin, a value of maximum tolerated distance from the closing target position, and
- defining the reference position as a position upstream of the zero position that is as far from the zero position as the maximum tolerated distance value.

In one embodiment,

called Pzero be the zero position,
called Dmax be the maximum tolerated distance value, and
called said Pref the reference position,
we have Dmax = | Pref - Pzero |, hence

Pref = Pzero + Dmax or Pref = Pzero - Dmax, depending on whether one considers as increasing position values those further away from or closer to the nozzle, respectively.
In one embodiment, one or each method envisages the step of

- physically bringing the valve pin at a reference closing position;
- storing such position (or store it in a memory); and
- using the stored value as the zero position (or in general using the stored value as the aforementioned reference value).

This procedure allows determining a zero value for the position of the valve pin, which increases the accuracy of monitoring position deviations.
In one embodiment, one or each method envisages acquiring from a user a value with which to set said reference value (or acquiring from a user a value with which said reference value is set).
In one embodiment, one or each method envisages acquiring from a user a value to set said maximum tolerated distance value, the maximum tolerated distance value defining the maximum permissible positional deviation with respect to the closing zero position for the valve pin.
The selection and/or said value acquired by the user may be acquired in various ways, e.g. from a graphical interface, e.g. of a computer, or from a software, in particular an injection molding process simulation software, e.g. Mold Flow®.
In one embodiment, in one or each method in the molding cycle a headlight is produced, e.g. for a vehicle such as an automobile.
In one embodiment, in one or each method steps 1)÷3) are performed via software, e.g. via a microcontroller program. In particular

- in step 1) a digital value is acquired from the sensor, e.g. via ADC conversion; and/or
- in step 2) digital values are processed. In particular, one or each of the quantities $Vm$, $\sigma$, $P_i$, Pzero, Dmax, Pref and Dmax are digital values.

The advantages of the invention will be clearer from the following description of a preferred system, in which

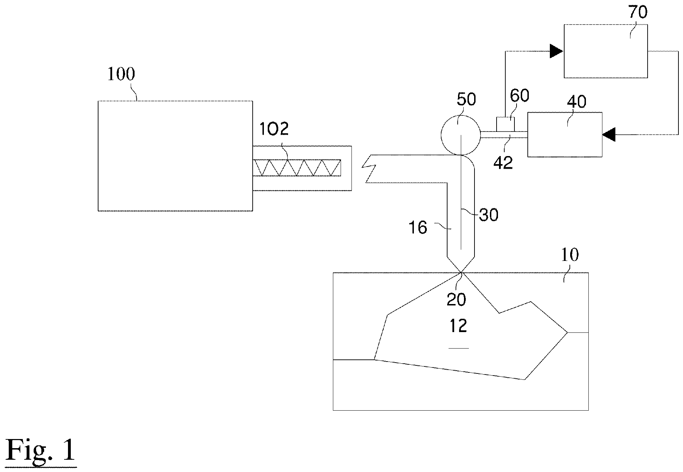

- Fig. 1 shows an injection molding system;
- Fig. 2 shows a graph for variables of the system in Fig. 1.

A known injection molding press 100 is provided with known means (e.g. a cylindrical screw 102) for generating a flow of molten material to be injected into a cavity 12 of a mold 10 through a manifold 16.
The manifold/distributor 16 (commonly called *hot runner*) is heated to receive the molten material from the press 100 and distribute it to one or more nozzles 20 towards the cavity 12 (the mold 10 may however comprise several cavities 12 that are different and/or equal to each other).
The flow of material exiting each nozzle 20 is regulated by a respective known valve pin 30. The pin 30 is translatable with a linear stroke inside the manifold 16 between a closed position, in which there is no exit of molten material from the nozzle 20, and an open position, in which there is exit of material towards the cavity 12. The position of the pin 30 determines the flow rate of molten material through the nozzle 20.
The valve pin 30 is driven by a respective electric actuator 40 (preferably a rotary, linear, or other type of electric motor). Each actuator 40 comprises an actuating member 42, e.g. an output shaft, connected via a kinematic chain 50 to the valve pin 30 to move it linearly back and forth.
A sensor 60 detects the position of the valve pin 30, directly or indirectly. In one embodiment, the sensor 60 is a rotary encoder connected to the member 42 to record its angular position, and the position of the valve pin 30 is detected indirectly.
An electronic controller 70 reads, e.g. via an ADC converter, the signal output by the sensor 60 and drives the actuator 40 to dynamically displace the pin 30 during an injection cycle.

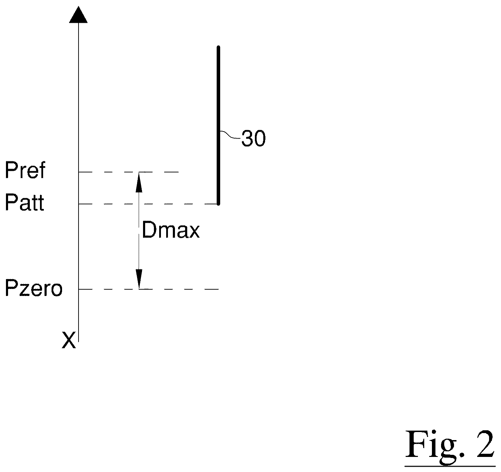

Fig. 2 schematically shows a stroke of the pin 30.

In one embodiment, a positional control that operates with absolute values is implemented. With respect to an X-axis oriented in a direction opposite to the nozzle 20 and parallel to the length of the pin 30, the current position of the tip of the pin 30, measured by the sensor 60, is defined as Patt. A reference position Pref is also defined that the tip of the pin 30 must at least reach during the closing step in order not to cause an anomaly. Therefore, during each molding cycle, the controller 70 detects Patt and verifies that at the end of the injection cycle the relationship Patt < Pref is true. If this does not happen, the controller 70 generates an alarm signal for the user. To avoid false alarms and to average out sporadic operating fluctuations, the controller 70 preferably generates an alarm signal only if the condition Patt < Pref is not met for N >= 2 consecutive cycles, e.g. N = 10.

In one embodiment, it is possible, and preferable, to operate with acquisitions relative to a desired zero position for the pin 30, to simplify the system calibration. Each type of mold, material, or piece to be molded has unique characteristics, therefore it is convenient to set an optimal zero closing position for the pin 30 each time and then measure the actual positional deviation of the pin 30 during molding.

With reference to Fig. 2, the zero position of the pin 30 is defined as Pzero and a deviation Dmax from Pzero is also defined. The deviation Dmax indicates the maximum acceptable distance at which the pin 30 can be with respect to Pzero at the end of the molding cycle with the nozzle 20 plugged. Here Pref = Pzero + Dmax.

Preferably Pzero and/or Dmax can be set via the controller 70, and can be obtained, for example, by physically taking the pin 30 to the desired position and then storing the value generated by the sensor 60 (e.g. in a memory of the controller 70). During each molding cycle, the controller 70 detects Patt via the sensor 60 and verifies that at the end of the injection cycle Patt < (Pzero + Dmax) is met. If this does not happen, or does not happen for N consecutive cycles, the controller 70 generates an alarm signal for the user.

Thanks to the warning or alarm signals generated by the system, it is possible to intervene promptly to correct or eliminate any imperfections that prevent the pin 30 from reaching the desired closing position. Consequently, the number of waste pieces is dramatically reduced.

If one reverses the orientation of the X-axis, the control condition becomes Patt > Pref in the first case and Patt > Pzero - Dmax in the second case.

$$Dmax = |\ Pref - Pzero\ |$$

holds anyway.

**Claims**

1. Monitoring method for an injection molding system, with the steps of

   1) closing an injection nozzle by moving a valve pin towards the injection nozzle, and through a sensor acquiring data indicative of the actual position of the pin when it has reached an end-of-travel position thereof towards the nozzle;
   2) obtaining a comparison value from the acquired data and comparing the comparison value with a reference value, and
   3) emitting a signal if the result of the comparison indicates that the actual position is further from the nozzle than the reference value.

2. Method according to claim 1, wherein the comparison value is calculated by processing one or more position values acquired by the sensor in the same injection cycle or in subsequent cycles, and the reference value is a numerical value that expresses a threshold position.

3. Method according to claim 1, wherein the comparison value is the position of the pin acquired by the sensor and the reference value is a reference position.

4. Method according to any preceding claim, wherein the signal is emitted after N times, N > = 2, that the result of the comparison indicates that the actual position is further from the nozzle than the reference position.

5. Method according to claim 4, wherein the signal is emitted after N consecutive times, N >= 2, that the result of the comparison indicates that the actual position is further from the nozzle than the actual position.

6.  Method according to any preceding claim, wherein the signal of step 3) is an audible or visual warning signal for a human user.

7.  Method according to any preceding claim, wherein the signal of step 3) is a signal with the function of stopping the operation of the molding system.

8.  Method according to any preceding claim, wherein

    the valve pin is physically brought to a reference closing position;
    such position is stored in a memory; and
    such stored value is used as said reference value.

9.  Method according to any preceding claim, wherein a value is acquired from a user and said reference value is set with the value acquired from a user.

10. Method according to any preceding claim, where in the nozzle has a stroke composed of a first section, closer to the nozzle, and a second section, further from the nozzle, and the pin is moved toward the nozzle by means of a position control in the second section and by means of a control of the force impressed on the pin in the first section, and step 1) is performed only in the first section.

Fig. 1

Fig. 2

**EUROPEAN SEARCH REPORT**

Application Number

EP 25 22 2081

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/066224 A1 (CONIX CORP [US]; SKORCH THOMAS [US]) 29 August 2002 (2002-08-29) | 1 | INV. B29C45/76 |
| Y | * abstract * <br> * page 2, lines 1-4, 12-16 * <br> * page 3, line 6 - line 9 * <br> * page 6, line 10 - line 31 * | 2-10 | ADD. B29C45/28 |
| Y | US 2021/379809 A1 (MA KUANG-HUI [TW] ET AL) 9 December 2021 (2021-12-09) <br> * abstract * <br> * figure 3 * <br> * paragraphs [0013], [0019], [0022], [0030], [0037] * | 2-9 | |
| Y | EP 2 156 937 A1 (OTTO MAENNER INNOVATION GMBH [DE]) 24 February 2010 (2010-02-24) | 10 | |
| A | * paragraphs [0003], [0004], [0008], [0015], [0026] * | 1 | |
| A | US 6 129 541 A (TAKEDA YOSHINOBU [JP]) 10 October 2000 (2000-10-10) <br> * column 3, line 19 - line 35 * | 1 | |
| A | WO 2013/109515 A1 (HUSKY INJECTION MOLDING [CA]; JENKO EDWARD JOSEPH [US]) 25 July 2013 (2013-07-25) <br> * page 2, line 24 - line 32 * <br> * page 7, line 6 - line 8 * <br> * page 7, line 28 - page 8, line 2 * | 1 | TECHNICAL FIELDS SEARCHED (IPC) <br><br> B29C |
| A | WO 2017/040648 A1 (NORDSON CORP [US]) 9 March 2017 (2017-03-09) <br> * abstract * | 1 | |

The present search report has been drawn up for all claims

| Place of search | Date of completion of the search | Examiner |
|---|---|---|
| Munich | 4 May 2026 | Alink, Maarten |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 22 2081

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2026

| Patent document cited in search report | | Publication date | Patent family member(s) | | Publication date |
|---|---|---|---|---|---|
| WO 02066224 | A1 | 29-08-2002 | NONE | | |
| US 2021379809 | A1 | 09-12-2021 | CN | 113771321 A | 10-12-2021 |
| | | | US | 2021379809 A1 | 09-12-2021 |
| EP 2156937 | A1 | 24-02-2010 | AT | E526140 T1 | 15-10-2011 |
| | | | CA | 2675740 A1 | 22-02-2010 |
| | | | CN | 101670652 A | 17-03-2010 |
| | | | DE | 102008039336 A1 | 25-02-2010 |
| | | | DK | 2156937 T3 | 16-01-2012 |
| | | | EP | 2156937 A1 | 24-02-2010 |
| | | | ES | 2375124 T3 | 27-02-2012 |
| | | | JP | 2010047007 A | 04-03-2010 |
| | | | PL | 2156937 T3 | 29-02-2012 |
| | | | PT | 2156937 E | 23-11-2011 |
| | | | RS | 52047 B | 30-04-2012 |
| | | | US | 2010047379 A1 | 25-02-2010 |
| US 6129541 | A | 10-10-2000 | DE | 69807837 T2 | 05-06-2003 |
| | | | EP | 0936048 A1 | 18-08-1999 |
| | | | JP | 3225914 B2 | 05-11-2001 |
| | | | JP | H11227005 A | 24-08-1999 |
| | | | US | 6129541 A | 10-10-2000 |
| WO 2013109515 | A1 | 25-07-2013 | CA | 2857525 A1 | 25-07-2013 |
| | | | EP | 2807012 A1 | 03-12-2014 |
| | | | US | 2015004271 A1 | 01-01-2015 |
| | | | WO | 2013109515 A1 | 25-07-2013 |
| WO 2017040648 | A1 | 09-03-2017 | CN | 107921460 A | 17-04-2018 |
| | | | EP | 3344399 A1 | 11-07-2018 |
| | | | JP | 6836584 B2 | 03-03-2021 |
| | | | JP | 2018526210 A | 13-09-2018 |
| | | | KR | 20180048782 A | 10-05-2018 |
| | | | US | 2018221910 A1 | 09-08-2018 |
| | | | WO | 2017040648 A1 | 09-03-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23170955 A1